# EUROPÄISCHE PATENTSCHRIFT

(11) **EP 3 388 690 B1**
(45) Veröffentlichungstag und Bekanntmachung des Hinweises auf die Patenterteilung: **22.09.2021**
(21) Anmeldenummer: 17000607.6
(22) Anmeldetag: 10.04.2017
(51) Int. Cl.: F16B 9/02, H02G 3/00

(54) **KONSOLE ZUR BEFESTIGUNG VON VERSORGUNGSLEITUNGEN ODER DERGLEICHEN AN EINER WAND**
BRACKET FOR FIXING SUPPLY LINES OR THE LIKE TO A WALL
CONSOLE DE FIXATION DE CONDUITES D'ALIMENTATION OU SIMILAIRES SUR UNE PAROI

(43) Veröffentlichungstag der Anmeldung: 17.10.2018
(73) Patentinhaber: HALFEN GmbH, 40764 Langenfeld (DE)
(72) Erfinder: Albartus, Dirk, 44795 Bochum (DE); Michalik, Regina, 42651 Solingen (DE); Van de Schoor, Paulus, 51147 Köln (DE); Mihajlov, Viktor, 40227 Düsseldorf (DE)
(74) Vertreter: Reinhardt, Annette

(56) Entgegenhaltungen:
- EP-A1- 0 583 701
- DE-A1- 4 000 504
- DE-U- 7 306 928
- ES-A1- 2 346 733

## Beschreibung

Die Erfindung betrifft eine Konsole zur Befestigung von Versorgungsleitungen oder dergleichen an einer Wand der im Oberbegriff des Anspruchs 1 angegebenen Gattung.

Aus der DE 73 06 928 U sind unterschiedliche Bauformen von Konsolen zur Halterung von Kabeln und/oder Rohrleitungen bekannt, die ein winkelförmiges Befestigungsteil und einen an dem Befestigungsteil schwenkbar und fixierbar gelagerten Tragarm umfassen. In einer Ausführung sind an den einander zugewandten Flächen von Tragarm und Befestigungsteil Kreuzriffelungen vorgesehen. In einer anderen Ausführung sind ineinander greifende Verzahnungen am Befestigungsteil und Tragarm angeordnet. Sowohl der Tragarm als auch das Befestigungsteil sind dadurch vergleichsweise aufwendig zu fertigen.

Die DE 40 00 504 A1 zeigt einen Zahnhalteanker zur längenverstellbaren, formschlüssigen Befestigung von Brüstungsplatten oder Fassadenplatten mit einem Langloch, dessen Längskanten mit einer Verstellverzahnung versehen sind. Zwischen den Längskanten ist ein Haltestück mit Gegenverzahnungen vorgesehen, die in die Verstellverzahnung eingreifen. Dadurch sollen auch hohe Kräfte in Längsrichtung der Schiene sicher übertragen werden können.

Die ES 2 346 733 A1 zeigt eine verstellbare Konsole.

Der Erfindung liegt die Aufgabe zugrunde, eine Konsole zur Befestigung von Versorgungsleitungen oder dergleichen an einer Wand zu schaffen, die einfach herstellbar ist und gleichzeitig eine große Variabilität und Tragfähigkeit besitzt.

Diese Aufgabe wird durch eine Konsole zur Befestigung von Versorgungsleitungen mit den Merkmalen des Anspruchs 1 gelöst.

Die Erfindung sieht vor, dass die Fixiereinrichtung mindestens eine Scheibe mit einer Öffnung umfasst, durch die der Befestigungsbolzen ragt, wobei die Scheibe Verzahnungselemente aufweist, die in Gegenverzahnungselemente an dem Befestigungsteil eingreifen. Durch die Ausbildung der Verzahnungselemente an der Scheibe kann der Tragarm selbst einfach ausgebildet sein. Über die Verzahnungselemente und Gegenverzahnungselemente lassen sich hohe Kräfte übertragen. Es wird eine formschlüssige Fixierung des Tragarms an dem Befestigungsteil erreicht. Aufgrund des Langlochs, durch das der Befestigungsbolzen der Fixiereinrichtung ragt, ist eine näherungsweise stufenlose Verstellung der Schwenklage des Tragarms gegenüber dem Befestigungsteil möglich.

Bevorzugt ist nur ein einziges Langloch für alle Schwenklagen vorgesehen. Dadurch ragt der Befestigungsbolzen immer durch das gleiche Langloch, und die Anordnung kann vormontiert ausgeliefert werden. Bei der Montage muss der Befestigungsbolzen lediglich noch in der gewünschten Lage fest angezogen werden, so dass der Aufwand für Ausrichtung und Fixierung der Konsole in der gewünschten Lage sehr gering ist.

Vorteilhaft ist der Tragarm ein Träger mit konstantem Querschnitt. Der Tragarm ist bevorzugt durch ein auf die gewünschte Länge abgelängtes Profil gebildet. In besonders bevorzugter Gestaltung besitzt der Tragarm eine glatte Oberfläche. Die formschlüssige Fixierung des Tragarms gegenüber dem Befestigungsteil kann über die Scheibe erfolgen, so dass der Tragarm selbst einfach aufgebaut werden kann. Dadurch, dass der Tragarm als Träger mit konstantem Querschnitt gebildet ist, ist auf einfache Weise eine Anpassung der gewünschten Auskraglänge des Tragarms möglich. Der Tragarm besitzt vorteilhaft zwei sich vollständig durch den Tragarm erstreckende Öffnungen, nämlich eine Öffnung für den Befestigungsbolzen und eine Öffnung für einen Lagerbolzen des Schwenkgelenks.

Eine hohe Stabilität des Tragarms lässt sich auf einfache Weise erreichen, wenn der Tragarm einen U-förmigen Querschnitt aufweist. Bevorzugt ragt der Befestigungsbolzen durch beide Schenkel des U-förmigen Querschnitts. In besonders bevorzugter Gestaltung ist der U-förmige Querschnitt in Einbaulage nach oben offen, so dass Versorgungsleitungen oder dergleichen über in den Tragarm eingreifende Befestigungsmittel an dem Tragarm positioniert bzw. fixiert werden können.

In bevorzugter Gestaltung besitzt auch das Befestigungsteil einen U-förmigen Querschnitt mit zwei Seitenabschnitten und einem sich zwischen den Seitenabschnitten erstreckenden Rücken. Der Tragarm greift bevorzugt zwischen die beiden Seitenabschnitte des Befestigungsteils ein. Durch die beidseitige Lagerung des Tragarms ergibt sich eine einfache und stabile Gestaltung. Bevorzugt besitzen beide Seitenabschnitte des Befestigungsteils sowohl ein Langloch als auch Gegenverzahnungselemente. Dadurch kann die Zahnhöhe zur Übertragung der gewünschten Kräfte vergleichsweise gering gehalten werden und dadurch die Teilung der Verzahnung entsprechend gering sein, so dass sich ein sehr geringer Abstand zwischen zwei benachbarten möglichen Positionen des Tragarms ergibt.

In bevorzugter Gestaltung sind der Befestigungsbolzen und ein Lagerbolzen des Schwenkgelenks identisch ausgebildet. Vorteilhaft erstreckt sich das Langloch mindestens teilweise auf der dem freien Ende des Tragarms abgewandten Seite der Schwenkachse. Die Höhe des Befestigungsteils kann dadurch in Richtung auf die dem Rücken entfernt liegende Seite abnehmen. Der Rücken des Befestigungsteils ist vorzugsweise vergleichsweise hoch ausgebildet, so dass eine gute Befestigung des Befestigungsteils an der Wand ermöglicht wird.

Eine geringe Bauhöhe wird erreicht, wenn die Schwenkachse des Schwenkgelenks und die Mittelachse des Befestigungsbolzens in einer gemeinsamen Ebene liegen, die zur Längsmittelachse des Tragarms parallel verläuft. Die Schwenkachse des Schwenkgelenks fällt dabei vorteilhaft mit der Mittelachse des Lagerbolzens zusammen. In besonders bevorzugter Gestaltung liegt die Längsmittelachse des Tragarms in der von der Mittelachse des Befestigungsbolzens und der Schwenkachse aufgespannten Ebene. In bevorzugter Gestaltung erstreckt sich das Langloch auf beide Seiten der Ebene. Dadurch kann der Tragarm gegenüber dem Befestigungsteil in beide Richtungen gekippt werden, so dass die Ausrichtung des Tragarms im Raum unabhängig von der Neigung der Wand beibehalten wird. Ein Drehen der Anordnung um 180° um eine senkrecht zur Wand stehende Achse und ein hierdurch bedingtes Ummontieren des Tragarms gegenüber dem Befestigungsteil kann entfallen. Bevorzugt ist das Langloch symmetrisch zu der Ebene ausgebildet. In besonders bevorzugter Gestaltung verläuft das Langloch bogenförmig um die Schwenkachse. Dadurch kann die Breite des Langlochs im Anlagebereich der Scheibe für jede Position des Tragarms konstant ausgebildet werden. Es kann jedoch auch vorgesehen sein, dass das Langloch als gerades Langloch ausgebildet ist, so dass sich die Position der Mittelachse des Befestigungsbolzens quer zur Längsrichtung des Langlochs je nach Position des Tragarms ändert.

Vorteilhaft ist der Tragarm gegenüber dem Befestigungsteil um einen Verschwenkwinkel von mindestens 60° verschwenkbar. Insbesondere ist ein Verschwenkwinkel von mindestens 90°, bevorzugt von mindestens 110° vorgesehen.

In einer Ausführungsvariante ist vorgesehen, dass die Verzahnungselemente an mindestens einer Stirnseite der Scheibe angeordnet sind und in Gegenverzahnungselemente an mindestens einer Längsseite des Langlochs eingreifen. Dadurch kann die Scheibe mindestens teilweise in dem Langloch angeordnet werden, so dass sich eine geringe seitliche Baugröße des Befestigungsteils und insbesondere der gesamten Konsole ergibt. Bevorzugt sind die Verzahnungselemente an der bezogen auf die Schwenkachse radial außen liegenden Längsseite des Langlochs angeordnet. Aufgrund des größeren Abstands zur Schwenkachse ist die Hebelwirkung vergrößert, so dass bereits über eine Verzahnung mit geringer Höhe vergleichsweise große Kräfte übertragen werden können. In bevorzugter Gestaltung ist die radial innen liegende Längsseite des Langlochs unverzahnt. Es kann jedoch auch vorgesehen sein, dass sowohl die radial außen liegende Längsseite als auch die radial innen liegende Längsseite des Langlochs Verzahnungselemente aufweisen.

In alternativer Gestaltung ist vorteilhaft vorgesehen, dass die Verzahnungselemente an einer Flachseite der Scheibe ausgebildet sind und in Gegenverzahnungselemente an der Außenseite des Befestigungsteils eingreifen. Durch die Anordnung der Verzahnungselemente an der Flachseite der Scheibe und die Anordnung der Gegenverzahnungselemente an der Außenseite des Befestigungsteils kann eine vergrößerte Fläche für die Verzahnungselemente und die Gegenverzahnungselemente genutzt werden. Durch die Anordnung an der Flachseite kann die Herstellung vereinfacht sein. Die Flachseite der Scheibe ist dabei vorteilhaft die Seite der Scheibe, die senkrecht zur Mittelachse des Befestigungsbolzens liegt.

Ausführungsbeispiele der Erfindung werden im Folgenden anhand der Zeichnung erläutert. Es zeigen:
- Fig. 1: eine schematische Darstellung der Anordnung von Konsolen an einer Wand,
- Fig. 2: eine Seitenansicht einer erfindungsgemäßen Konsole,
- Fig. 3: einen Schnitt entlang der Linie III-III in Fig. 2,
- Fig. 4: eine Ansicht in Richtung des Pfeils IV in Fig. 2,
- Fig. 5: eine Seitenansicht des Befestigungsteils der Konsole,
- Fig. 6: einen Schnitt entlang der Linie VI-VI in Fig. 5,
- Fig. 7: eine Seitenansicht der Scheibe der Konsole,
- Fig. 8: einen Schnitt entlang der Linie VIII-VIII in Fig. 7,
- Fig. 9: eine perspektivische Darstellung eines Ausführungsbeispiels einer Konsole,
- Fig. 10: das Befestigungsteil der Konsole aus Fig. 9 in perspektivischer Darstellung,
- Fig. 11 und Fig. 12: perspektivische Darstellungen der Konsole aus Fig. 9 in unterschiedlichen Ausrichtungen.

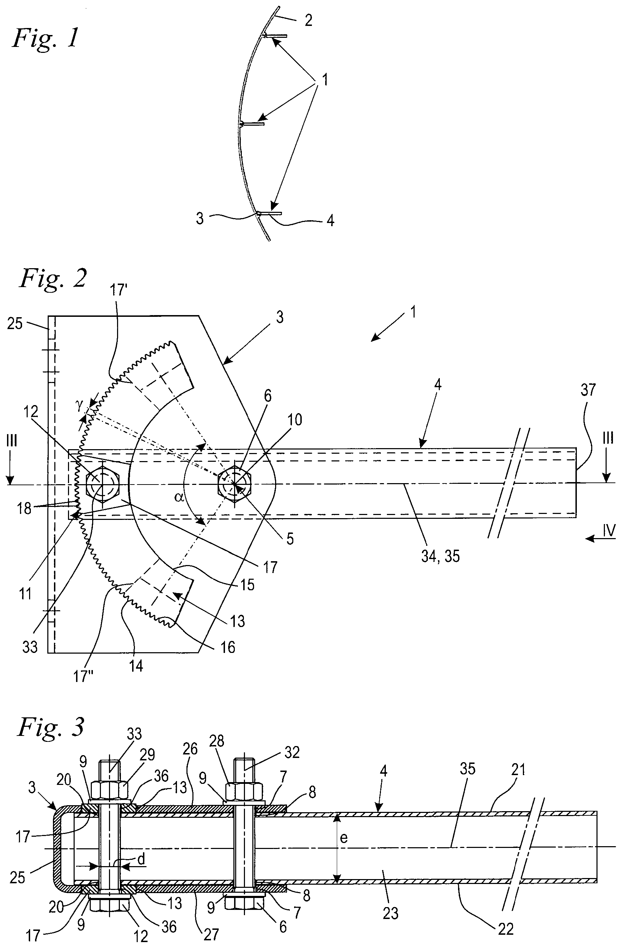

Fig. 1 zeigt schematisch die Anordnung von Konsolen 1 an einer Wand 2. Die Wand 2 ist vorteilhaft die Wand der Röhre eines Tunnels. An einer solchen gebogenen Tunnelwand sind üblicherweise Versorgungsleitungen, beispielsweise elektrische Leitungen in Form von Kabeln oder Versorgungsleitungen in Form von Rohrleitungen zu befestigen. Jede Konsole besitzt einen Tragarm 4, der über ein Befestigungsteil 3 an der Wand 2 fixiert ist. Um die Versorgungsleitungen auf dem Tragarm 4 anordnen zu können, muss der Tragarm 4 horizontal ausgerichtet werden. Aufgrund der Wölbung der Wand 2 ist der Tragarm 4 hierzu gegenüber dem Befestigungsteil 3 verschwenkbar.

Fig. 2 zeigt den Aufbau der Konsole 1 im Einzelnen. Der Tragarm 4 ist an dem Befestigungsteil 3 über ein Schwenkgelenk 5 um eine Schwenkachse 10 schwenkbar gelagert. Das Schwenkgelenk 5 umfasst einen Lagerbolzen 6, der durch das Befestigungsteil 3 und den Tragarm 4 ragt. Zur Fixierung des Tragarms 4 in unterschiedlichen Schwenklagen ist eine Fixiereinrichtung 11 vorgesehen. Die Fixiereinrichtung 11 umfasst einen Befestigungsbolzen 12, der durch eine Scheibe 17 ragt. Die Scheibe 17 greift mindestens teilweise in ein Langloch 13 des Befestigungsteils 3 ein. Im Ausführungsbeispiel ist die Scheibe 17 weitgehend in dem Langloch 13 angeordnet. Das Langloch 13 besitzt eine erste Längsseite 14 und eine zweite Längsseite 15, die das Langloch 13 begrenzen. Die Längsseite 14 ist dabei in größerem Abstand zur Schwenkachse 10 angeordnet als die Längsseite 15. Die Scheibe 17 besitzt Verzahnungselemente 18, die in Gegenverzahnungselemente 16 der ersten Längsseite 14 des Langlochs 13 eingreifen. Dadurch ist die Scheibe 17 in dem Langloch 13 in fixiertem Zustand formschlüssig in Längsrichtung des Langlochs 13 gehalten. Der Befestigungsbolzen 12 hält die Scheibe 17 im Langloch 13 und stellt sicher, dass die Scheibe 17 nicht seitlich aus dem Langloch 13 rutschen kann. Bei gelöstem Befestigungsbolzen 12 kann die Scheibe in Längsrichtung des Langlochs 13 in dem Langloch 13 verstellt werden. Wie Fig. 2 auch zeigt, verläuft das Langloch 13 bogenförmig um die Schwenkachse 10. Der Tragarm 4 besitzt ein freies Ende 37, das von der Wand 2 (Fig. 1) und von dem Befestigungsteil 3 weg ragt. Die Scheibe 17 und das freie Ende 37 sind auf gegenüberliegenden Seiten der Schwenkachse 10 angeordnet. Der Abstand des freien Endes 37 zur Schwenkachse 10 ist dabei um ein Vielfaches größer als der Abstand des Befestigungsbolzens 12 zur Schwenkachse 10.

In Fig. 2 sind die beiden Endlagen 17′ und 17" der Scheibe 17 mit gestrichelter Linie eingezeichnet. Zwischen den beiden Endlagen 17′ und 17" ist der Tragarm 4 um einen Verschwenkwinkel α verschwenkbar. Der Verschwenkwinkel α beträgt vorteilhaft mindestens 60°, insbesondere mindestens 90°. In bevorzugter Gestaltung beträgt der Verschwenkwinkel α mindestens 110°. Dadurch ist die Konsole 1 an der Wand 2 flexibel in unterschiedlichen Positionen einsetzbar.

Der Abstand zwischen benachbarten Verzahnungselementen 14 und der Abstand zwischen benachbarten Gegenverzahnungselementen 18 ist jeweils vergleichsweise klein. Der Verschwenkwinkel γ, um den der Tragarm 4 zwischen benachbarten Positionen des Tragarms 4 zu verschwenken ist, ist dadurch ebenfalls vergleichsweise klein, so dass eine nahezu stufenlose Verstellung der Schwenklage des Tragarms 4 möglich ist. Der Verschwenkwinkel γ zwischen benachbarten möglichen Positionen des Tragarms 4 ist vorteilhaft kleiner als 10°, insbesondere kleiner als 5°, bevorzugt kleiner als 3°.

Der Befestigungsbolzen 12 ragt durch eine in Fig. 3 gezeigte Öffnung 36 der Scheibe 17. Der Durchmesser der Öffnung 36 ist nur geringfügig größer als der Außendurchmesser d des Befestigungsbolzens 12. Eine Änderung der Position der Scheibe 17 in dem Langloch 13 bewirkt aufgrund der Verstellung des Befestigungsbolzens 12 eine Verschwenkung des Tragarms 4. Über den Befestigungsbolzen 12 und die Scheibe 17 ist der Tragarm 4 dadurch in unterschiedlichen Schwenklagen an dem Befestigungsteil 3 fixierbar.

Fig. 2 zeigt den Tragarm 4 in einer Mittellage, in der der Tragarm 4 senkrecht zu einem an der Wand 2 anzuordnenden Rücken 25 des Befestigungsteils 3 ausgerichtet ist. Der Tragarm 4 besitzt eine Längsmittelachse 35, die mit der Schwenkachse 10 eine Ebene 34 aufspannt. Wie Fig. 21 zeigt, liegt auch die Mittelachse 33 des Befestigungsbolzens 12 in der Ebene 34. Die Mittelachse 33 und eine in Fig. 3 gezeigte Mittelachse 32 des Lagerbolzens 6 liegen in der gleichen Ebene 34. Die Mittelachse 32 fällt dabei im Ausführungsbeispiel mit der Schwenkachse 10 zusammen.

Im Ausführungsbeispiel ist das Langloch 13 symmetrisch zur Ebene 34 ausgebildet. Der Tragarm 4 kann dadurch jeweils um den halben Verschwenkwinkel α ausgehend von der in Fig. 2 gezeigten Mittellage nach oben oder nach unten verschwenkt werden. Die Ausrichtung des Tragarms 4 im Raum bleibt dabei erhalten, ohne dass der Tragarm 4 an dem Befestigungsteil 3 ummontiert werden muss.

Wie Fig. 3 zeigt, besitzt das Befestigungsteil 3 einen U-förmigen Querschnitt mit zwei Seitenabschnitten 26 und 27, die sich etwa senkrecht vom Rücken 25 und der Wand 2 weg erstrecken. Die Seitenabschnitte 26 und 27 besitzen jeweils ein Langloch 13 und eine in größerem Abstand zum Rücken 25 angeordnete Öffnung 7. Durch die Öffnungen 7 in den beiden Seitenabschnitten 26 und 27 ragt der Lagerbolzen 6. Der Lagerbolzen 6 ist im Ausführungsbeispiel als Schraube ausgebildet und mit einer auf den Lagerbolzen 6 aufgeschraubten Mutter 28 fixiert. Zwischen dem Kopf des Lagerbolzens 6 bzw. der Mutter 28 und den Seitenabschnitten 26 bzw. 27 ist jeweils eine Unterlegscheibe 9 angeordnet. Der Tragarm 4 ist im Ausführungsbeispiel ebenfalls U-förmig ausgebildet und besitzt die beiden Schenkel 21 und 22, die senkrecht zu einem die Schenkel 21 und 22 verbindenden Rücken 23 angeordnet sind. Die Schenkel 21 und 22 weisen jeweils eine Öffnung 8 auf. Der Lagerbolzen 6 ragt durch die zwei Öffnungen 7 des Befestigungsteils 3 sowie durch die zwei Öffnungen 8, die in zwei Schenkeln 21 und 22 des Tragarms 4 ausgebildet sind.

Wie Fig. 3 zeigt, sind im Ausführungsbeispiel zwei Scheiben 17 vorgesehen, die jeweils in einem Langloch 13 eines der Seitenabschnitte 26 bzw. 27 angeordnet sind. Im Ausführungsbeispiel sind die Scheiben 17 nur geringfügig dicker als die Seitenabschnitte 26 und 27, so dass die Scheiben 17 nur geringfügig über die Seitenabschnitte 26 und 27 hervorstehen. Der Abstand zwischen den Seitenabschnitten 26 und 27 entspricht näherungsweise der parallel zur Schwenkachse 10 gemessenen Breite e des Tragarms 4. Dadurch ist der Tragarm 4 mit geringem Spiel zwischen den Seitenabschnitten 26 und 27 angeordnet. Aufgrund der U-förmigen Gestaltung des Befestigungsteils 3 können die Seitenabschnitte 26 und 27 über den Lagerbolzen 6 fest gegen den Tragarm 4 gedrückt werden, so dass der Tragarm 4 zwischen den Seitenabschnitten 26 und 27 verspannt ist und sich in Richtung der Schwenkachse 10 nicht gegenüber dem Befestigungsteil 3 bewegen kann.

Wie Fig. 3 zeigt, ist der Befestigungsbolzen 12 ebenfalls als Schraube ausgebildet. Der Befestigungsbolzen ist an der dem Kopf des Befestigungsbolzens 12 gegenüberliegenden Seite des Befestigungsteils 3 in eine Mutter 29 eingeschraubt. Zwischen der Mutter 29 bzw. dem Kopf des Befestigungsbolzens 12 und der jeweils benachbarten Scheibe 17 ist jeweils eine Unterlegscheibe 9 angeordnet. Der Tragarm 4 besitzt in jedem Schenkel 21, 22 eine Öffnung 20, durch die der Befestigungsbolzen 12 geführt ist. Wie Fig. 3 auch zeigt, sind der Lagerbolzen 6 und der Befestigungsbolzen 12 in den Öffnungen 7 und 8 sowie den Öffnungen 20 und 36 mit geringem Spiel geführt.

Der Befestigungsbolzen 12 hält die Scheibe 17 im Langloch 13 und stellt sicher, dass die Scheibe 17 nicht seitlich aus dem Langloch 13 rutschen kann. Über den Befestigungsbolzen 12 und die Scheibe 17 ist der Tragarm 4 in unterschiedlichen Schwenklagen an der Befestigungseinrichtung 3 fixierbar.

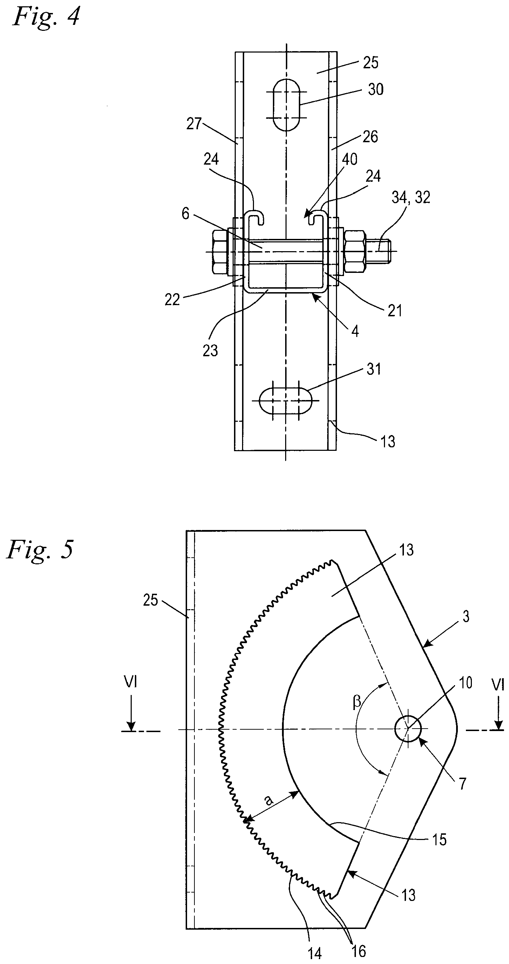

Wie Fig. 4 zeigt, besitzt der Tragarm 4 einen etwa U-förmigen Querschnitt, der durch den Rücken 23 und die beidseitig an dem Rücken 23 verlaufenden Schenkel 21 und 22 gebildet ist. Die Schenkel 21 und 22 besitzen dem Rücken 23 abgewandte Längsseiten 24, an denen die Schenkel 21 und 22 nach innen umgebogen sind. Dadurch ist zwischen den Längsseiten 24 ein Schlitz 40 mit verringerter Breite gebildet. In den Schlitz 40 können Befestigungselemente eingreifen und hinter den Längsseiten 24 fixiert werden. Der Tragarm 4 kann dadurch unmittelbar zur Fixierung von Halteelementen für Versorgungsleitungen genutzt werden. Dadurch, dass die Ausrichtung des Tragarms 4 sowohl bei einer Neigung des Tragarms 4 aus der Mittellage nach oben als auch bei einer Neigung des Tragarms 4 aus der Mittellage nach unten erhalten bleibt, ist dies unabhängig von der Position des Befestigungsteils 3 an einer gewölbten Tunnelwandung möglich.

Wie Fig. 4 auch zeigt, besitzt der Rücken 25 des Befestigungsteils 3 Befestigungsöffnungen 30 und 31. Im Ausführungsbeispiel sind die Befestigungsöffnungen 30 und 31 als Langlöcher ausgebildet, wobei die Befestigungsöffnung 30 in Längsrichtung des Rückens 25 verläuft und die Befestigungsöffnung 31 quer hierzu. Wie Fig. 4 auch zeigt, ist eine Befestigungsöffnung 30 oberhalb der Ebene 34 angeordnet und die andere Befestigungsöffnung 31 unterhalb der Ebene 34. Dadurch ergibt sich ein vergleichsweise großer Abstand zwischen den Befestigungsöffnungen 30 und 31, der zu einer hohen Stabilität der Befestigung an der Wand 2 führt.

Fig. 5 zeigt die Gestaltung des Befestigungsteils 3 im Einzelnen. Wie Fig. 5 zeigt, erstreckt sich das Langloch 13 über einen Winkel β um die Schwenkachse 10. Die Schwenkachse 10 ist die Mittelachse der Öffnung 7. Der Winkel β ist größer als der Verschwenkwinkel α, da die Scheibe 17 in das Langloch 13 eingreift. Das Langloch 13 besitzt eine Breite a. Die radial innenliegende Längsseite 15 ist im Ausführungsbeispiel glatt ausgebildet. Es kann jedoch auch vorgesehen sein, dass auch die Längsseite 15 Gegenverzahnungselemente 16 aufweist.

Wie Fig. 5 zeigt, besitzt das Befestigungsteil 3 an der dem Rücken 25 abgewandten Seite eine etwa dreieckige Gestalt. Im Bereich der Öffnung 7 ist die senkrecht zur Ebene 34 (Fig. 2) gemessene Höhe des Befestigungsteils 3 verringert.

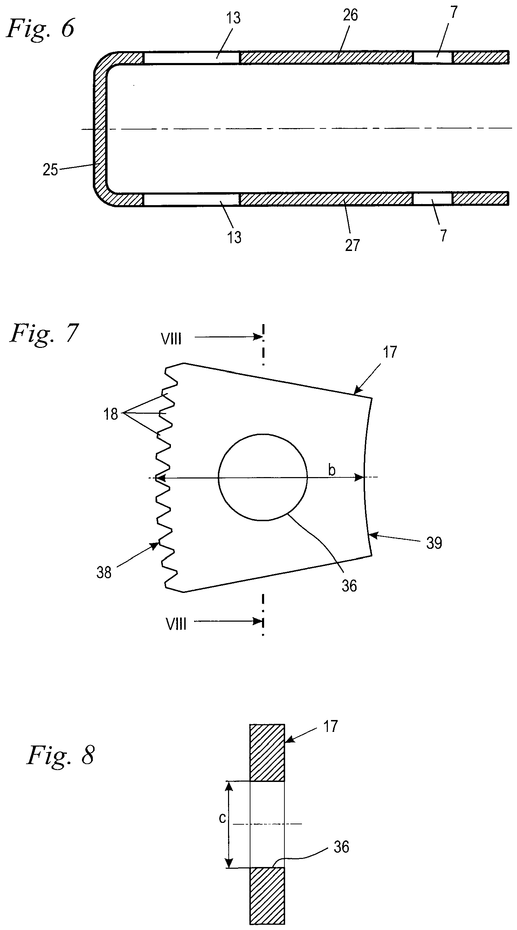

Fig. 6 zeigt die U-förmige Gestalt des Befestigungsteils 3 und die Anordnung der Langlöcher 13 und der Öffnungen 7. Die beiden Öffnungen 7 und die beiden Langlöcher 13 sind in den Seitenabschnitten 26 und 27 jeweils deckungsgleich zueinander angeordnet.

Die Fig. 7 und 8 zeigen die Scheibe 17. Die Scheibe 17 ist als Kreisringsegment ausgebildet. Die Scheibe 17 besitzt eine radial außenliegende Stirnseite 38, an der die Verzahnungselemente 18 angeordnet sind. Die gegenüberliegende, radial innenliegende Stirnseite 39 ist glatt ausgebildet. Die zwischen den Stirnseiten 38 und 39 gemessene Breite b der Scheibe 17 ist nur geringfügig kleiner als die Breite a des Langlochs 13. Vorteilhaft sind die Breiten a und b im Rahmen der üblichen Fertigungstoleranzen gleich bzw. als Spielpassung ausgelegt. Dadurch ist die Scheibe 17 im Langloch 13 eng geführt, und es ergibt sich eine genaue, insbesondere näherungsweise spielfreie Positionierung des Tragarms 4.

Wie Fig. 8 zeigt, besitzt die Öffnung 36 einen Durchmesser c. Der Durchmesser c ist auf den Durchmesser d (Fig. 3) des Befestigungsbolzens 12 abgestimmt. Der Durchmesser c ist nur geringfügig größer als der Durchmesser b, so dass der Befestigungsbolzen 12 mit geringem Spiel in der Öffnung 36 gehalten ist.

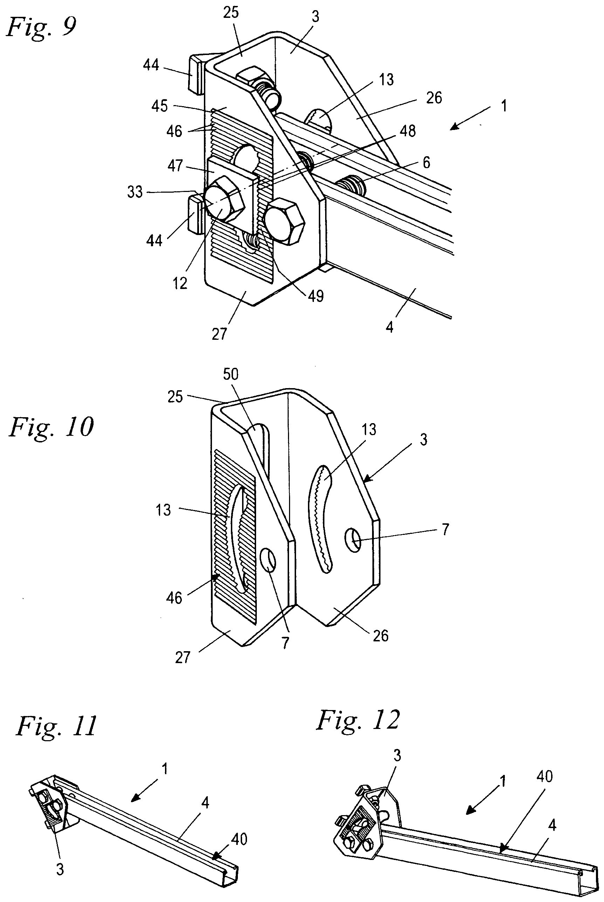

Die Fig. 9 bis 12 zeigen ein weiteres Ausführungsbeispiel einer Konsole 1. Die Konsole 1 umfasst ein Befestigungsteil 3 sowie einen Tragarm 4. Gleiche Bezugszeichen kennzeichnen dabei in allen Figuren einander entsprechende Elemente. Der Tragarm 4 ist über einen Lagerbolzen 6 und einen Befestigungsbolzen 12 am Befestigungsteil 3 fixiert. Zur Fixierung des Tragarms 4 in unterschiedlichen Schwenklagen sind an beiden Seitenabschnitten 26 und 27 Scheiben 47 angeordnet. Die Scheiben 47 greifen jedoch nicht in die Langlöcher 13 ein, sondern liegen an Außenseiten 45 der Seitenabschnitte 26 und 27 an. Die Scheiben 47 besitzen jeweils eine Flachseite 49, die den Seitenabschnitten 26 und 27 zugewandt liegen. Die Mittelachse 33 verläuft durch die Flachseiten 49. An den Flachseiten 49, durch die der Befestigungsbolzen 12 ragt, sind Verzahnungselemente 48 angeordnet, die in Gegenverzahnungselemente 46 an den Außenseiten 45 der Seitenabschnitte 26 und 27 ragen. Im Ausführungsbeispiel sind die Gegenverzahnungselemente 46 mit konstanter Breite ausgebildet und verlaufen beidseitig des Langlochs 13. Die seitliche Position der Scheibe 47 in den Gegenverzahnungselementen ändert sich aufgrund der bogenförmigen Gestaltung der Langlöcher 13 beim Verschwenken des Tragarms 4.

Wie Fig. 9 auch zeigt, ragen durch den Rücken 25 Befestigungselemente 44. Die Befestigungselemente 44 können beispielsweise als Hammerkopf- oder Hakenkopfschrauben ausgebildet sein und in eine an der Wand 2 (Fig. 1) angeordnete Befestigungsschiene ragen. Dadurch ist eine einfache Fixierung des Befestigungsteils 3 an der Wand 2 möglich. Wie Fig. 10 zeigt, besitzt der Rücken 25 des Befestigungsteiles 3 im Ausführungsbeispiel nach den Fig. 9 bis 12 ein durchgehendes Langloch 50, durch das die Befestigungselemente 44 ragen.

Fig. 10 zeigt die beiden Seitenabschnitte 26 und 27 und die in den Seitenabschnitten 26 und 27 ausgebildeten Langlöcher 13 und Öffnungen 7.

Die Fig. 11 und 12 zeigen die Konsole 1 in unterschiedlichen Schwenklagen des Tragarms. Fig. 11 zeigt die Konsole 1 in der nach unten geschwenkten Endlage des Tragarms 4, und Fig. 12 zeigt die Konsole 1 in der nach oben geschwenkten Endlage des Tragarms 4. Wie die Fig. 11 und 12 zeigen, ist der Schlitz 40 des Tragarms 4 in beiden Ausrichtungen nach oben orientiert, so dass durch den Schlitz 40 Befestigungselemente zur Positionierung und/oder Fixierung von Versorgungsleitungen am Tragarm 4 gefuhrt werden können.

In beiden Ausführungsbeispielen ist der Tragarm 4 als Träger mit konstantem Querschnitt ausgebildet. Der Tragarm 4 kann beispielsweise von einem gewalzten Profil abgelängt sein. Die Oberfläche des Tragarms 4 ist vorzugsweise glatt und weist keine Profilierung, Verzahnung oder dergleichen auf. Dadurch kann der Tragarm 4 einfach hergestellt werden. Sowohl der Befestigungsbolzen 12 als auch der Lagerbolzen 6 ragen jeweils durch eine Öffnung 7 bzw. ein Langloch 13 der Seitenabschnitte 26 und 27 des Befestigungsteils 3 sowie durch eine Öffnung 8, 20 des Tragarms 4. Der Befestigungsbolzen 12 und der Lagerbolzen 6 sind in den Ausführungsbeispielen identisch ausgebildet.

## Patentansprüche

1. Konsole zur Befestigung von Versorgungsleitungen oder dgl. an einer Wand, insbesondere der Wand (2) der Röhre eines Tunnels, wobei die Konsole (1) ein Befestigungsteil (3) zur Befestigung an der Wand (2) und einen an dem Befestigungsteil (3) gehaltenen Tragarm (4) umfasst, wobei der Tragarm (4) an dem Befestigungsteil (3) an einem Schwenkgelenk (5) um eine Schwenkachse (10) schwenkbar gelagert ist, wobei die Konsole (1) eine Fixiereinrichtung (11) zur Fixierung des Tragarms (4) an dem Befestigungsteil (3) in unterschiedlichen Drehlagen besitzt, wobei die Fixiereinrichtung (11) einen Befestigungsbolzen (12) umfasst, der durch mindestens eine Öffnung (20) des Tragarms (4) und mindestens ein Langloch (13) des Befestigungsteils (3) ragt,
**dadurch gekennzeichnet, dass** die Fixiereinrichtung (11) mindestens eine Scheibe (17, 47) mit einer Öffnung (36) umfasst, durch die der Befestigungsbolzen (12) ragt, wobei die Scheibe (17, 47) Verzahnungselemente (18, 48) aufweist, die in Gegenverzahnungselemente (16, 46) an dem Befestigungsteil (3) eingreifen.

2. Konsole nach Anspruch 1,
**dadurch gekennzeichnet, dass** der Tragarm (4) ein Träger mit konstantem Querschnitt ist.

3. Konsole nach Anspruch 1 oder 2,
**dadurch gekennzeichnet, dass** der Tragarm (4) eine glatte Oberfläche besitzt.

4. Konsole nach einem der Ansprüche 1 bis 3,
**dadurch gekennzeichnet, dass** der Tragarm (4) einen U-förmigen Querschnitt aufweist und dass der Befestigungsbolzen (12) durch beide Schenkel (21, 22) des U-förmigen Querschnitts ragt.

5. Konsole nach einem der Ansprüche 1 bis 4,
**dadurch gekennzeichnet, dass** das Befestigungsteil (3) einen U-förmigen Querschnitt mit zwei Seitenabschnitten (26, 27) und einem sich zwischen den Seitenabschnitten (26, 27) erstreckenden Rücken (25) besitzt.

6. Konsole nach Anspruch 5,
**dadurch gekennzeichnet, dass** beide Seitenabschnitte (26, 27) des Befestigungsteils (3) ein Langloch (13) und Gegenverzahnungselemente (16) besitzen.

7. Konsole nach einem der Ansprüche 1 bis 6,
**dadurch gekennzeichnet, dass** der Befestigungsbolzen (12) und ein Lagerbolzen (6) des Schwenkgelenks (5) identisch ausgebildet sind.

8. Konsole nach einem der Ansprüche 1 bis 7,
**dadurch gekennzeichnet, dass** das Langloch (13) sich mindestens teilweise auf der dem freien Ende (37) des Tragarms (4) abgewandten Seite der Schwenkachse (10) erstreckt.

9. Konsole nach einem der Ansprüche 1 bis 8,
**dadurch gekennzeichnet, dass** die Schwenkachse (10) des Schwenkgelenks (5) und die Mittelachse (22) der Befestigungsbolzens (12) in einer gemeinsamen Ebene (34) liegen, die zur Längsmittelachse (35) des Tragarms (4) parallel verläuft.

10. Konsole nach Anspruch 9,
**dadurch gekennzeichnet, dass** das Langloch (13) sich auf beide Seiten der Ebene (34) erstreckt und vorteilhaft symmetrisch zur Ebene (34) ausgebildet ist.

11. Konsole nach einem der Ansprüche 1 bis 10,
**dadurch gekennzeichnet, dass** das Langloch (13) bogenförmig um die Schwenkachse (10) verläuft.

12. Konsole nach einem der Ansprüche 1 bis 11,
**dadurch gekennzeichnet, dass** der Tragarm (4) gegenüber dem Befestigungsteil (3) um einen Verschwenkwinkel (α) von mindestens 60°, insbesondere mindestens 90°, vorteilhaft mindestens 110° verschwenkbar ist.

13. Konsole nach einem der Ansprüche 1 bis 12,
**dadurch gekennzeichnet, dass** die Verzahnungselemente (18) an mindestens einer Stirnseite (38) der Scheibe (17) angeordnet sind und in Gegenverzahnungselemente (16) an mindestens einer Längsseite (14) des Langlochs (13) eingreifen.

14. Konsole nach Anspruch 13,
**dadurch gekennzeichnet, dass** die Verzahnungselemente (18) an der bezogen auf die Schwenkachse (10) radial außen liegenden Längsseite (14) des Langlochs (13) angeordnet sind und dass die radial innen liegende Längsseite (15) des Langlochs (13) unverzahnt ist.

15. Konsole nach einem der Ansprüche 1 bis 12,
**dadurch gekennzeichnet, dass** die Verzahnungselemente (48) an einer Flachseite (49) der Scheibe (47) ausgebildet sind und in Gegenverzahnungselemente (46) an der Außenseite (45) des Befestigungsteils (3) eingreifen.

## Claims

1. Bracket for fastening supply lines or the like to a wall, in particular the wall (2) of the tube of a tunnel, wherein the bracket (1) comprises a fastening part (3) for fastening to the wall (2) and a support arm (4) held on the fastening part (3), wherein the support arm (4) is mounted on the fastening part (3) so as to be pivotable about a pivot axis (10) by way of a pivot joint (5), wherein the bracket (1) has a fixing device (11) for fixing the support arm (4) to the fastening part (3) in different rotary positions, wherein the fixing device (11) comprises a fastening bolt (12) that projects through at least one opening (20) in the support arm (4) and at least one slot (13) in the fastening part (3),
**characterized in that** the fixing device (11) comprises at least one disc (17, 47) having an opening (36) through which the fastening bolt (12) projects, wherein the disc (17, 47) has toothing elements (18, 48) which engage in mating toothing elements (16, 46) on the fastening part (3).

2. Bracket according to Claim 1,
**characterized in that** the support arm (4) is a carrier with a constant cross section.

3. Bracket according to Claim 1 or 2,
**characterized in that** the support arm (4) has a smooth surface.

4. Bracket according to one of Claims 1 to 3,
**characterized in that** the support arm (4) has a U-shaped cross section, and **in that** the fastening bolt (12) projects through both legs (21, 22) of the U-shaped cross section.

5. Bracket according to one of Claims 1 to 4,
**characterized in that** the fastening part (3) has a U-shaped cross section with two side portions (26, 27) and a back (25) extending between the side portions (26, 27).

6. Bracket according to Claim 5,
**characterized in that** the two side portions (26, 27) of the fastening part (3) have a slot (13) and mating toothing elements (16).

7. Bracket according to one of Claims 1 to 6,
**characterized in that** the fastening bolt (12) and a bearing bolt (6) of the pivot joint (5) are formed in an identical manner.

8. Bracket according to one of Claims 1 to 7,
**characterized in that** the slot (13) extends at least partially on that side of the pivot axis (10) that is remote from the free end (37) of the support arm (4).

9. Bracket according to one of Claims 1 to 8,
**characterized in that** the pivot axis (10) of the pivot joint (5) and the central axis (22) of the fastening bolt (12) lie in a common plane (34), which extends parallel to the longitudinal centre axis (35) of the support arm (4).

10. Bracket according to Claim 9,
**characterized in that** the slot (13) extends on both sides of the plane (34) and is advantageously formed symmetrically to the plane (34).

11. Bracket according to one of Claims 1 to 10,
**characterized in that** the slot (13) extends in an arcuate manner about the pivot axis (10).

12. Bracket according to one of Claims 1 to 11,
**characterized in that** the support arm (4) is pivotable with respect to the fastening part (3) through a pivoting angle (a) of at least 60°, in particular at least 90°, advantageously at least 110°.

13. Bracket according to one of Claims 1 to 12,
**characterized in that** the toothing elements (18) are arranged on at least one face side (38) of the disc (17) and engage in mating toothing elements (16) on at least one longitudinal side (14) of the slot (13).

14. Bracket according to Claim 13,
**characterized in that** the toothing elements (18) are arranged on that longitudinal side (14) of the slot (13) that is located radially on the outside with respect to the pivot axis (10), and **in that** there are no teeth on that longitudinal side (15) of the slot (13) that is located radially on the inside.

15. Bracket according to one of Claims 1 to 12,
**characterized in that** the toothing elements (48) are formed on a flat side (49) of the disc (47) and engage in mating toothing elements (46) on the outer side (45) of the fastening part (3).

## Revendications

1. Console pour la fixation de conduites d'alimentation ou analogues sur une paroi, notamment la paroi (2) des tubes d'un tunnel, la console (1) comprenant une partie de fixation (3) pour la fixation à la paroi (2) et un bras porteur (4) maintenu sur la partie de fixation (3), le bras porteur (4) étant monté de manière pivotante autour d'un axe de pivotement (10) sur la partie de fixation (3) au niveau d'une articulation pivotante (5), la console (1) comprenant un dispositif d'immobilisation (11) pour immobiliser le bras porteur (4) sur la partie de fixation (3) dans différentes positions de rotation, l'appareil d'immobilisation (11) comprenant un boulon de fixation (12), qui dépasse à travers au moins une ouverture (20) du bras porteur (4) et au moins un trou oblong (13) de la partie de fixation (3),
**caractérisé en ce que** l'appareil d'immobilisation (11) comprend au moins une plaque (17, 47) munie d'une ouverture (36), à travers laquelle le boulon de fixation (12) dépasse, la plaque (17, 47) comprenant des éléments de denture (18, 48), qui pénètrent dans des éléments de denture complémentaires (16, 46) sur la partie de fixation (3).

2. Console selon la revendication 1,
**caractérisée en ce que** le bras porteur (4) est un support de section transversale constante.

3. Console selon la revendication 1 ou 2,
**caractérisée en ce que** le bras porteur (4) présente une surface lisse.

4. Console selon l'une quelconque des revendications 1 à 3,
**caractérisée en ce que** le bras porteur (4) présente une section transversale en forme de U et **en ce que** le boulon de fixation (12) dépasse à travers les deux branches (21, 22) de la section transversale en forme de U.

5. Console selon l'une quelconque des revendications 1 à 4,
**caractérisée en ce que** la partie de fixation (3) présente une section transversale en forme de U munie de deux sections latérales (26, 27) et d'un dos (25) s'étendant entre les sections latérales (26, 27).

6. Console selon la revendication 5,
**caractérisée en ce que** les deux sections latérales (26, 27) de la partie de fixation (3) comprennent un trou oblong (13) et des éléments de denture complémentaires (16).

7. Console selon l'une quelconque des revendications 1 à 6,
**caractérisée en ce que** le boulon de fixation (12) et un boulon de palier (6) de l'articulation pivotante (5) sont configurés de manière identique.

8. Console selon l'une quelconque des revendications 1 à 7,
**caractérisée en ce que** le trou oblong (13) s'étend au moins partiellement sur le côté de l'axe de pivotement (10) détourné de l'extrémité libre (37) du bras porteur (4).

9. Console selon l'une quelconque des revendications 1 à 8,
**caractérisée en ce que** l'axe de pivotement (10) de l'articulation pivotante (5) et l'axe médian (22) du boulon de fixation (12) se situent dans un plan commun (34), qui s'étend parallèlement à l'axe médian longitudinal (35) du bras porteur (4).

10. Console selon la revendication 9,
**caractérisée en ce que** le trou oblong (13) s'étend sur les deux côtés du plan (34) et est avantageusement configuré de manière symétrique par rapport au plan (34).

11. Console selon l'une quelconque des revendications 1 à 10,
**caractérisée en ce que** le trou oblong (13) s'étend en forme d'arc autour de l'axe de pivotement (10).

12. Console selon l'une quelconque des revendications 1 à 11,
**caractérisée en ce que** le bras porteur (4) peut pivoter par rapport à la partie de fixation (3) d'un angle de pivotement (a) d'au moins 60°, notamment d'au moins 90°, avantageusement d'au moins 110°.

13. Console selon l'une quelconque des revendications 1 à 12,
**caractérisée en ce que** les éléments de denture (18) sont agencés sur au moins un côté frontal (38) de la plaque (17) et pénètrent dans des éléments de denture complémentaires (16) sur au moins un côté longitudinal (14) du trou oblong (13).

14. Console selon la revendication 13,
**caractérisée en ce que** les éléments de denture (18) sont agencés sur le côté longitudinal (14) du trou oblong (13) situé radialement à l'extérieur par rapport à l'axe de pivotement (10), et **en ce que** le côté longitudinal (15) du trou oblong (13) situé radialement à l'intérieur n'est pas denté.

15. Console selon l'une quelconque des revendications 1 à 12,
**caractérisée en ce que** les éléments de denture (48) sont formés sur un côté plat (49) de la plaque (47), et pénètrent dans des éléments de denture complémentaires (46) sur le côté extérieur (45) de la partie de fixation (3).
